# EUROPEAN PATENT APPLICATION

(11) **EP 2 105 598 A2**
(43) Date of publication of application: **30.09.2009**
(21) Application number: 09155386.7
(22) Date of filing: 17.03.2009
(51) Int. Cl.: F02C 7/08, F02C 7/047

(54) **A system for extending the turndown range of a turbomachine**

(30) Priority: 24.03.2008 US 53921
(71) Applicant: General Electric Company, Schenectady, NY 12345 (US)
(72) Inventor: Wang, Renhua, Marietta, GA 30062 (US); Diantonio, Gregory L., Marietta, GA 30008 (US); Calleros, Erwing, Roswell, GA 30075 (US); Lin, TsungPo, Marietta, GA 30067 (US); Fisher, William T., Roswell, Georgia 30075 (GB)
(74) Representative: Gray, Thomas

(57) **Abstract**

A system (100, 200, 300, 400) for heating the inlet-air (130) of a gas turbine (105) is provided. The system (100, 200, 300, 400) may incorporate an external energy source (170) to increase the temperature of the inlet-air (130). The system (100, 200, 300, 400) may extend the turndown of a gas turbine (105) operating at partload.

## Description

### BACKGROUND OF THE INVENTION

The present invention relates to the operation of a turbomachine, and more particularly to a system for extending the turndown range by heating the inlet-air.

Turbomachines, such as gas turbines, aero-derivatives, or the like, commonly operate in a combined-cycle and/or cogeneration mode. In combined- cycle operation, a heat recovery steam generator, which generates steam, receives the exhaust-gas from the turbomachine; the steam then flows to a steam turbine that generates additional electricity. In a co-generation operation, a portion of the steam generated by the heat recovery steam generator is sent to a separate process requiring the steam.

Combined-cycle and cogeneration plants are rated to generate the maximum amount of energy (mechanical, electrical, etc) while operating at baseload. However, baseload operation, though desired by operators, is not always feasible. There may not be a demand in the energy market (electrical grid, or the like) for all of the energy generated at baseload. Here, the powerplant must either shutdown or operate at partload, where less than the maximum amount of energy is generated.

Turbomachines are typically required to maintain emissions compliance while generating power. A turbomachine operating at partload, may not maintain emissions compliance over the entire partload range, (from spinning reserve to near baseload). Turndown range may be considered the loading range where the turbomachine maintains emissions compliance. A broad turndown range allows operators to maintain emissions compliance, minimize fuel consumption, and avoid the thermal transients associated with shutting down the powerplant.

For the foregoing reasons, there is a need for a system for extending the turndown range. The system should reduce the fuel consumed by the turbomachine while operating at the partload range. The system should not require significant changes to the turbomachine.

### BRIEF DESCRIPTION OF THE INVENTION

In accordance with an embodiment of the present invention, a system for extending a turndown range of a turbomachine operating at partload, the system comprising: a turbomachine comprising a compressor, which receives an inlet-air; a combustion system; and a turbine section; wherein the turbomachine produces an exhaust-gas; a heat recovery steam generator (HRSG), wherein the HRSG receives a portion of the exhaust-gas and produces steam; and at least one air preheater comprising at least one heat exchanging section, wherein the at least one air preheater heats the inlet-air before the inlet-air flows to the compressor; wherein a portion of the at least one heat exchanging section receives a fluid at a temperature allowing for heating of the inlet-air; and wherein the fluid flows from a source external to the turbomachine; and wherein heating the inlet-air reduces an output of the turbomachine and extends the turndown range.

The extended turndown range can be determined by at least one factor, wherein the at least one factor comprises: an ambient condition, at least one exhaust emissions limit, turbine operability limits, and a maximum temperature range. The ambient condition can comprise at least one of: an ambient temperature, an ambient pressure, an ambient humidity, or combinations thereof. The fluid can comprise at least one of: water, exhaust-gas, steam, and combinations thereof.

### BRIEF DESCRIPTION OF THE DRAWINGS

There follows a detailed description of embodiments of the invention by way of example only with reference to the accompanying drawings in which:
Figure 1 is a schematic illustrating an example of a system for extending the turndown range of a turbomachine in accordance with a first embodiment of the present invention.
Figure 2 is a schematic illustrating an example of a system for extending the turndown range of a turbomachine in accordance with a second embodiment of the present invention.
Figure 3 is a schematic illustrating an example of a system for extending the turndown range of a turbomachine in accordance with a third embodiment of the present invention; and
Figure 4 is a schematic illustrating an example of a system for extending the turndown range of a turbomachine in accordance with a fourth embodiment of the present invention.

### DETAILED DESCRIPTION OF THE INVENTION

The following detailed description of preferred embodiments refers to the accompanying drawings, which illustrate specific embodiments of the invention. Other embodiments having different structures and operations do not depart from the scope of the present invention.

The present invention may be applied to a wide variety of turbomachines including, but not limiting of, gas turbines, aero-derivative combustion turbines, and the like. An embodiment of the present invention takes the form of an application and process that may heat the air entering a turbomachine (hereinafter "gas turbine") to increase the turndown range.

An embodiment of the present invention has the technical effect of extending the turndown range by heating the air (hereinafter "inlet-air") entering the compressor of the gas turbine. As described below, the inlet-air is heated by an energy source external to the gas turbine.

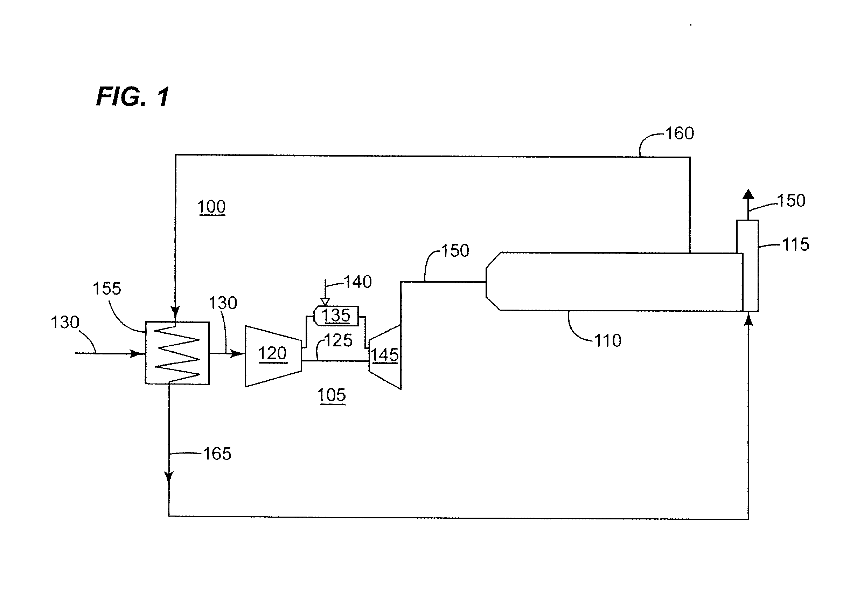

Referring now to the Figures, where the various numbers represent like elements throughout the several views, Figure 1 is a schematic illustrating an example of a system 100 for extending the turndown range of a gas turbine 105 in accordance with a first embodiment of the present invention.

Figure 1 illustrates a site comprising a gas turbine 105; a heat recovery steam generator (HRSG) 110; a stack 115; and an air preheater 155. Generally, the gas turbine 105 comprises an axial flow compressor 120 having a shaft 125. Inlet-air 130 enters the compressor 120, is compressed and then discharged to a combustion system 135, where a fuel 140, such as natural gas, is burned to provide high-energy combustion gases which drives the turbine section 145. In the turbine section 145, the energy of the hot gases is converted into work, some of which is used to drive the compressor 120 through the shaft 125, with the remainder available for useful work to drive a load such as the generator, mechanical drive, or the like (none of which are illustrated). The exhaust-gas 150 from the turbine section 145 may then flow to the HRSG 110, which may transfer a portion of the exhaust-gas 150 energy into steam (not illustrated).

During baseload operation, the combustion system 135 may ensure that the exhaust-gas 150 flowing out of the stack 115 meets the site emissions requirements. Depending on the turndown range of the gas turbine 105, certain partload operations may violate the site emissions requirements, which may require the shutdown of the gas turbine 105. An increase in the turndown range may avoid the need to shutdown the gas turbine 105. Also, an extended turndown range allows for operating the gas turbine 105 at lower loads, while maintaining emissions compliance and consuming less fuel 140.

The present invention extends the turndown range by heating the inlet-air 130. Generally, the output (electrical, mechanical, or the like) of a gas turbine 105 is governed by the amount of mass-flow entering the compressor 120. The mass-flow may be considered the product of the density and the volume-flow of the inlet-air 130 entering the compressor 120. The amount of volume-flow entering the compressor 120 may vary on the ambient temperature conditions and the angle of Variable Inlet Guide Vanes (IGVs), if present on the gas turbine 105. The IGV angle may determine the flow area at the inlet of the compressor 120. The IGV angle may be reduced to a minimum angle, limiting the amount of turndown. At the minimum IGV angle, a corresponding minimum volume-flow is drawn into the compressor 120.

In the present invention, the heating of the inlet-air 130 decreases the density, allowing less dense inlet-air 130 to enter the compressor 120. Here, at a given load point the volume-flow entering the compressor 120 may remain constant, however the mass-flow decreases due to the decrease in density of the inlet-air 130. As discussed, the output of the gas turbine 105 may be determined by the mass-flow entering the gas turbine 105; therefore less output is produced due to the heating of the inlet-air 130, compared to not heating of the inlet-air 130.

The heating of the inlet-air 130 also increases the temperature (hereinafter "compressor discharge temperature") of the air 130 exiting the compressor 120. This heated inlet-air 130 then enters the combustion system 135. The heated air 130 aids in reaching the overall universal reference temperature ("firing temperature") of the gas turbine 105. The heated inlet-air 130 allows the gas turbine 105 to consume less fuel 140 to obtain the firing temperature. Here, more fuel 140 would be consumed if unheated inlet-air 130 entered the compressor 120.

Overall, the present invention incorporates at least one air preheater 155, which may be installed upstream of the compressor 120. The air preheater 155 may be a heat exchanger, or the like. The air preheater 155 may be sized to adequately heat the inlet-air 130 to a temperature that increases the turndown range.

Generally, the temperature of the unheated inlet-air 130 may be determined by the ambient conditions or the outlet temperature of any air conditioning system (not illustrated) located upstream of the air preheater 155. An embodiment of the present invention may increase the temperature of the inlet-air 130 to any temperature allowed for by the air preheater 155. However, the increase in temperature of the inlet-air 130 may be limited by at least one of several factors, such as but not limiting of, the geometrical limitations of the air preheater 155; a temperature that may violate a thermal, operational, or mechanical limitation; or the like. For example, but not limiting of, the system 100 may increase the temperature of the inlet-air 130 from approximately 59 degrees Fahrenheit to approximately 120 degrees Fahrenheit. Here, the inlet-air 130 may have an inlet flowrate of 3,000,000 pounds/hour.

The system 100, illustrated in Figure 1, includes at least one air preheater 155, a preheater supply line 160; and a preheater discharge line 165. The preheater supply line 160 allows a portion of the exhaust-gas 150, or other fluid, such as, but not limiting of, water, steam, or the like, to flow from the HRSG 110 to the air preheater 155. In this first embodiment of the present invention, an end of the preheater supply line 160 is connected to a portion of the HRSG 110, where the exhaust-gas 150 may be extracted. The preheater supply line 160 receives a portion of the exhaust-gas 150 from the HRSG 110. The exhaust-gas 150 may flow through the preheater supply line 160, which may have an opposite end connected to a portion of the air preheater 155.

This first embodiment of the present invention allows a user to determine where the exhaust-gas 150 is extracted from on the HRSG 110. The present invention may allow a user to optimize the location on the HRSG 110 where the exhaust-gas 150 is extracted and sent to the air preheater 155. A user may consider a variety of factors when determining the optimized location on the HRSG 110. These factors may include, for example, but not limiting of, the following. Temperature: the temperature of the fluid used to increase the temperature of the inlet-air 130 (exhaust-gas 150, water, steam, or the like), should be higher than the maximum desired temperature that the inlet-air 130 may be raised to by the air preheater 155. The maximum desired temperature might be used for sizing the air preheater 155. Flow: flow of the fluid should be sufficient to supply the air preheater 155, while maintaining sufficient flow for other demands from the HRSG 110, or the like. Fluid type: the use of water, if available, as the fluid for increasing the temperature of the inlet-air 130 may be optimum, possibly requiring less mass-flow and a relatively smaller sized air preheater 155. Energy Source: the fluid may derive from an energy source that may be utilized without negatively impacting the overall benefits of heating the inlet-air 130. The energy source may include, for example, but not limiting of, outlet from a condenser or fuel heater 175; packing flows, or the like; exhaust-gas 150; discharge from the stack 115; any other energy source external to the bottoming cycle.

For example, but not limiting of, an operator of the site may use a portion of the exhaust-gas 150 flowing towards the condenser (not illustrated). Here, this energy may be considered 'low value' because the energy needed to create steam may have been already extracted. However, another site, may extract the exhaust-gas 150 from another area of the HRSG 110. Here, for example, but not limiting of, an operator may decide that instead of restricting the flow of the exhaust-gas 150 entering a section of the HRSG 110, divert a portion of the exhaust-gas 150 to the air preheater 155.

In use, the system 100 operates while the gas turbine 105 is not at baseload. As the gas turbine 105 unloads, the present invention may divert a portion of the exhaust-gas 150 to the air preheater 155 via the preheater supply 160. The exhaust-gas 150 may flow through an inlet portion of the air preheater 155. As the inlet-air 130 flows through the air preheater 155, the heat from the exhaust-gas 150 is transferred to, and increases the temperature of, the inlet-air 130. After flowing through the air preheater 155, the exhaust-gas 150 may flow through the preheater discharge line 165 to the stack 115 and/or the HRSG 110.

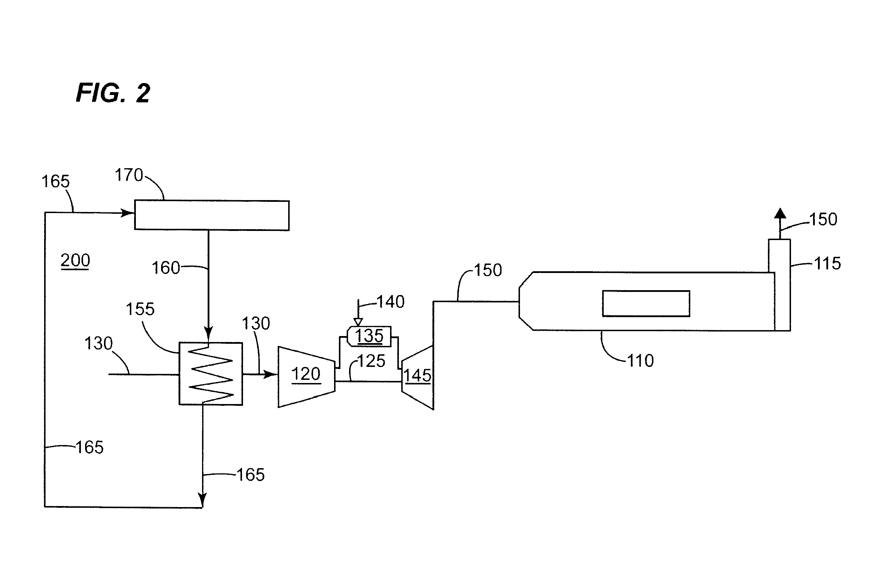

Figures 2 through 4 illustrate alternate embodiments of the present invention. A key difference between all embodiments of the present invention is the source of energy used to increase the temperature of the inlet-air 130. The discussions of Figure 2 through 4 focus on the differences between each alternate embodiment and the embodiment illustrated in Figure 1.

Figure 2 is a schematic illustrating an example of a system 200 for extending the turndown range of a gas turbine 105 in accordance with a second embodiment of the present invention. Here, the primary difference between this second embodiment and the first embodiment is the addition of at least one external energy source (EES) 170, which provides the energy for increasing the temperature of the inlet-air 130.

The EES 170 may provide sufficient energy to heat the inlet-air 130 to the temperature that allows for extending the turndown range. As illustrated in Figure 2, the EES 170 may eliminate the need for extracting the exhaust-gas 150 from the HRSG 110. In this second embodiment, the exhaust-gas 150 may be used for other purposes and/or may flow through the stack 115. Alternatively, the EES 170 may operate in conjunction with the embodiment of illustrated in Figure 1. Here, the EES 170 may operate as the primary energy system for increasing the temperature of the inlet-air 130 and the extraction from the HRSG 110, may serve as a secondary energy system (and vice-versa).

The EES 170 may include at least one of the following energy systems: a wind turbine, a boiler, an engine, an additional combustion turbine, an additional HRSG, a power plant, a solar energy source, geothermal energy source, fuel cell/chemical reaction, external process, and combinations thereof; none of which are illustrated in Figure 2. Each of the aforementioned energy system may indirectly or directly increase the temperature of the inlet-air 130.

For example, but not limiting of, a wind turbine may indirectly increase the temperature of the inlet fluid 130. Here, the energy generated by the wind turbine may heat water within a tank (not illustrated) integrated with the preheater supply line 160. The heated water may flow through the preheater supply line 160 to the air preheater 155. After flowing through the air preheater 155, the heated water may flow through the preheater discharge line 165, which may be integrated with the EES 170. Alternatively, for example, but not limiting of, a boiler may directly increase the temperature of the inlet fluid 130. Here, the preheater supply line 160 may be integrated with a portion of the boiler. The steam or hot water generated by the boiler may flow through the preheater supply line 160 and the air preheater 155. After flowing through the air preheater 155, the steam or hot water may flow through the preheater discharge line 165, which may be integrated with the EES 170.

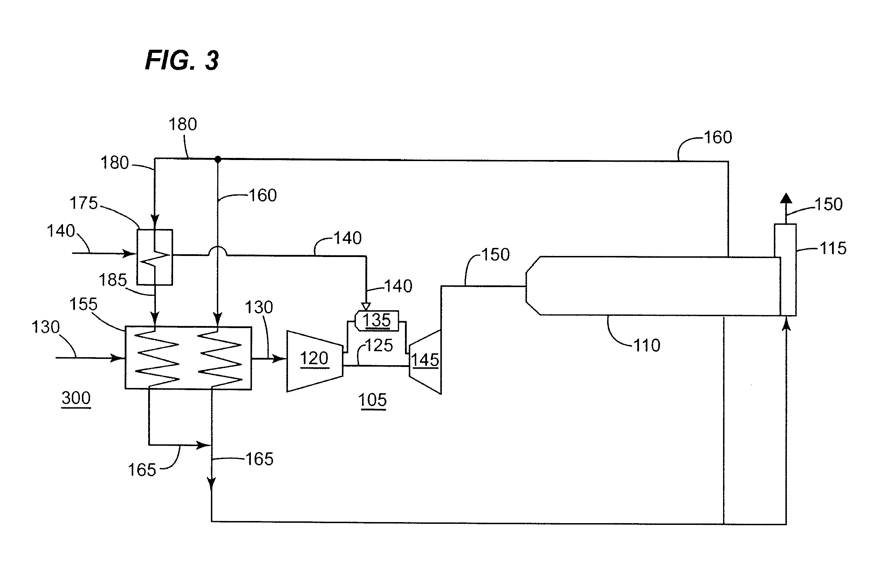

Figure 3 is a schematic illustrating an example of a system 300 for extending the turndown range of a gas turbine 105 in accordance with a third embodiment of the present invention. Here, the primary difference between this third embodiment and the first embodiment is the addition of the fuel heater 175. Some gas turbines 105 use heated fuel 140 as a way to increase performance. The fuel heater 175 commonly heats the fuel 140 on the site where the gas turbine 105 is located. The fuel heater 175 may have the form of a heat exchanger, or the like.

As illustrated in Figure 3, the exhaust-gas 150 may exit the HRSG 110 via the preheater supply line 160. In an embodiment of the present invention, the air preheater 155 may include multiple portions allowing for a plurality of inlet flows. As illustrated in Figure 3, the air preheater 155 may include a first inlet portion integrated with the fuel heater discharge line 185, and a second inlet portion integrated with the preheater supply line 160.

In this third embodiment, the preheater supply line 160 may be integrated with a fuel heater supply line 180. Here, a portion of the exhaust-gas 150 may flow into the fuel heater 175. Another portion of the exhaust-gas 150 may flow into the air preheater 155. After flowing through the fuel heater 175, the exhaust-gas 150 may flow through the fuel heater discharge line 185 to the air preheater 155. After flowing to the air preheater 155, the exhaust-gas 150 may then flow through the preheater discharge line 165 to the stack 115 and/or the HRSG 110, as previously described.

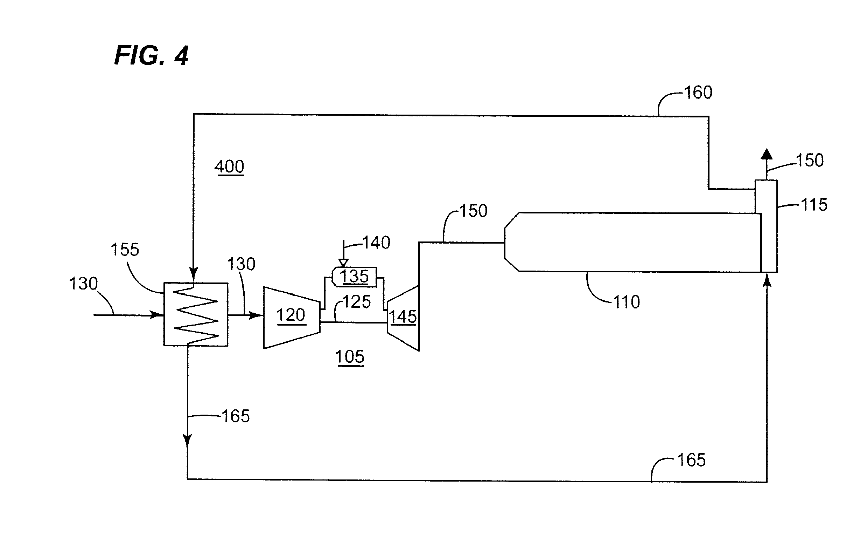

Figure 4 is a schematic illustrating an example of a system 400 for extending the turndown range of a gas turbine 105 in accordance with a fourth embodiment of the present invention. Here, the primary difference between this fourth embodiment and the first embodiment is that the exhaust-gas 150 is extracted from the stack 115, as opposed to the HRSG 110, as illustrated in Figure 1.

In this fourth embodiment of the present invention, an end of the preheater supply line 160 is connected to a portion of the stack 115, where the exhaust-gas 150 is extracted. The exhaust-gas 150 may flow through the preheater supply line 160, which may have an opposite end connected to a portion of the air preheater 155.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, it should be appreciated that any arrangement, which is calculated to achieve the same purpose, may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A system (100, 200, 300, 400) for extending a turndown range of a turbomachine (105) operating at partload, the system (100, 200, 300, 400) comprising:
a turbomachine (105) comprising a compressor (120), which receives an inlet-air (130); a combustion system (135); and a turbine section (145); wherein the turbomachine (105) produces an exhaust-gas;
a heat recovery steam generator (HRSG) (110), wherein the HRSG (110) receives a portion of the exhaust-gas (150)and produces steam; and
at least one air preheater (155) comprising at least one heat exchanging section,
wherein the at least one air preheater (155) heats the inlet-air (130) before the inlet-air (130) flows to the compressor (120);
wherein a portion of the at least one heat exchanging section receives a fluid at a temperature allowing for heating of the inlet-air (130); and wherein the fluid flows from a source external to the turbomachine (105); and
wherein heating the inlet-air (130) reduces an output of the turbomachine (105) and extends the turndown range.

2. The system (100, 200, 300, 400) of claim 1, wherein an extended turndown range comprises from about 5% to about 40% of the maximum rated load of the turbomachine (105).

3. The system (100, 200, 300, 400) of claim 1 or 2, wherein the inlet-air (130) is heated to a range of about 10 to about 200 degrees Fahrenheit above an unheated temperature of the inlet-air (130).

4. The system (100, 200, 300, 400) of any of the preceding claims, wherein the fluid comprises a portion of the exhaust-gas (150) flowing through the HRSG (110).

5. The system (100, 200, 300, 400) of claim 4, wherein the exhaust-gas (150) exits the HRSG (110) at an optimized location, wherein the optimized location allows for the HRSG (110) to maintain operation after the exhaust-gas (150) exits.

6. The system (100, 200, 300, 400) of claim 5, wherein at least one factor determines the optimized location.

7. The system (100, 200, 300, 400) of claim 6, wherein the at least one factor comprises: a fluid temperature, a fluid flow, a fluid type, and an energy source.

8. The system of claim 7, wherein the fluid temperature is higher than a temperature of the inlet-air (130).

9. The system of claim 7, wherein the fluid type comprises at least one of: water, the exhaust-gas (150), steam, and combinations thereof.

10. The system (100, 200, 300, 400) of any of the preceding claims, further comprising at least one external energy source (170), wherein the at least one external heat source discharges the fluid.

11. The system of claim 10, wherein the at least one external heat source comprises at least one of: a wind turbine, a boiler, an engine, an additional turbomachine, an additional HRSG, a power plant, a solar energy source, geothermal energy source, fuel cell/chemical reaction, external process, and combinations thereof.

12. The system (100, 200, 300, 400) of any of the preceding claims, further comprising a fuel heater (175) located upstream of the air preheater (155) and downstream of the HRSG (110), wherein the at least one fuel heater (175) receives a portion to the exhaust-gas (15) exiting the HRSG (110).

13. The system of claim 12, wherein the fuel heater discharge enters the air preheater and comprises the exhaust-gas.

14. The system (100, 200, 300, 400) of any of the preceding claims, further comprising a stack (115), wherein the stack (115) receives the exhaust-gas (150) flowing downstream of the HRSG (110).

15. The system of claim 14, wherein the fluid comprises a portion of the exhaust-gas within the stack (115).
